Europäisches Patentamt

European Patent Office

Office européen des brevets

(19)

(11) Veröffentlichungsnummer: **0 075 918**
**B1**

(12) # EUROPÄISCHE PATENTSCHRIFT

(45) Veröffentlichungstag der Patentschrift :
18.09.85

(21) Anmeldenummer : 82108939.8

(22) Anmeldetag : 27.09.82

(51) Int. Cl.⁴ : **G 02 B 26/00**

(54) Schalter für Lichtleiter.

(30) Priorität : 29.09.81 DE 3138709

(43) Veröffentlichungstag der Anmeldung :
06.04.83 Patentblatt 83/14

(45) Bekanntmachung des Hinweises auf die Patenterteilung : 18.09.85 Patentblatt 85/38

(84) Benannte Vertragsstaaten :
CH FR GB LI

(56) Entgegenhaltungen :
DE-A- 2 903 848
GB-A- 1 426 475
US-A- 4 146 856

(73) Patentinhaber : Siemens Aktiengesellschaft
Berlin und München Wittelsbacherplatz 2
D-8000 München 2 (DE)

(72) Erfinder : Bruch, Helmut, Ing. grad.
Päwesiner Weg 33
D-1000 Berlin 20 (DE)

## Beschreibung

Der Erfindung liegt die Aufgabe zugrunde, einen sehr geringen Abstand mit geringen Maßtoleranzen sicher einzustellen.

Diese Aufgabe wird durch die Erfindung gemäß dem Patentanspruch gelöst. Die Schaltzunge und das feste Trägerteil sind in der Art einer Rahmenfeder einstückig miteinander verbunden. Dabei ist das Verbindungsstück in zwei seitlich der Schaltzunge verlaufenden Verbindungsstegen realisiert. Durch die Verformung der Sicke senkrecht zur Längsrichtung der Lichtleiter ergibt sich eine sehr geringe Longitudinalbewegung in der Art einer Hebelübersetzung. Da diese Bewegung in unmittelbarer Nähe der Lichtleiterenden erzeugt wird, läßt sie sich sehr direkt auf die entsprechende Stelle übertragen. Durch die Möglichkeit, einen denkbar geringen Abstand mit geringem Aufwand genau einzustellen, läßt sich eine gegenseitige Berührung der Lichtleiterenden sicher vermeiden und der Dämpfungsverlust äusserst gering halten.

Durch die britische Patentschrift 1 426 475 ist es z. B. bekannt, einen Lichtleiter auf der Schaltzunge und dem Trägerteil zu befestigen. Der zuvor ringförmig geritzte Lichtleiter wird dann durch Abheben der Schaltzunge glatt getrennt. Der Patentschrift ist nicht entnehmbar, wie der erforderliche Abstand zwischen den Endflächen der Lichtleiter hergestellt wird. In einem solchen Fall kann der Abstand mit Hilfe der vorliegenden Erfindung genau eingestellt werden.

Hierbei wird im Trägerteil vor dem Befestigen der Lichtleiter eine schwache Sicke ausgeformt, die danach flach gedrückt wird. Dadurch läßt sich eine sehr genaue und geringe Longitudinalbewegung der Lichtleiterenden relativ zueinander erreichen.

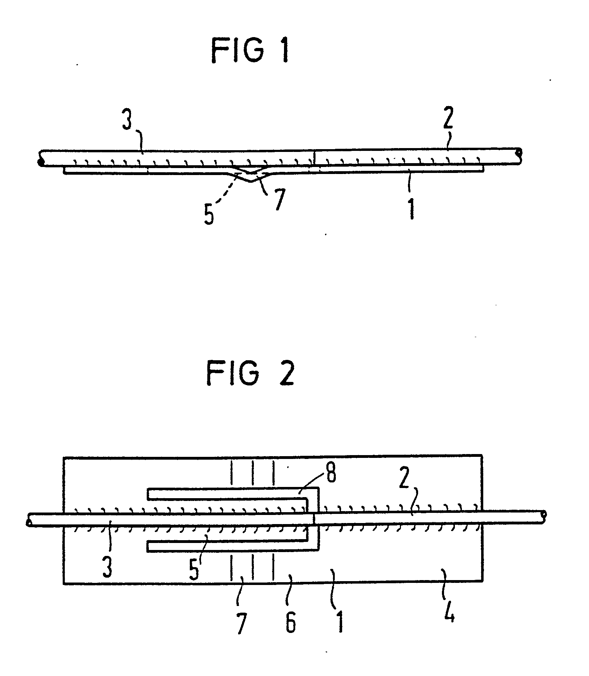

Im folgenden wird die Erfindung anhand eines in der Zeichnung dargestellten Ausführungsbeispieles näher erläutert. Die beiden Fig. 1 und 2 zeigen in einer Seitenansicht und einer Draufsicht einen gemeinsamen Haltekörper 1, auf dem ein im Schalter festliegendes Lichtleiterende 2 und ein transversal bewegbares Lichtleiterende 3 z. B. durch Klebstoff befestigt sind. Der Haltekörper 1 besteht aus einem festen Trägerteil 4, einer durch eine Ausstanzung 8 ausgeformten verbiegbaren Schaltzunge 5 sowie seitlichen Verbindungsstegen 6, die die Schaltzunge und das Trägerteil einstückig miteinander verbinden. In den Verbindungsstegen sind schwache Sicken 7 ausgeformt. Bei der Herstellung des Schalters stoßen die Endflächen der beiden Lichtleiter 2 und 3 während des Festklebens bis nach dem Aushärten des Klebstoffes aneinander. Die Figuren zeigen die Lichtleiter in diesem Stadium. In dieser Stellung kann sich die Schaltzunge 5 mit dem beweglichen Lichtleiterende 3 nicht frei gegenüber dem festliegenden Lichtleiterende 2 bewegen. Durch Flachdrücken der beiden Sicken 7 in den Verbindungsstegen 6 werden diese gestreckt und die beiden Lichtleiterenden 2 und 3 um ein geringes und genau definierbares Maß auseinandergezogen. Dadurch entsteht ein geringer freier Abstand zwischen den beiden Lichtleiterenden 2 und 3, wobei sehr geringe Dämpfungsverluste bei sicherer mechanischer Trennung der beiden Lichtleiterenden 2 und 3 erreicht werden.

## Patentanspruch

Schalter zum optischen Trennen und Verbinden von Lichtleitern (2, 3), von denen einer transversal auslenkbar auf einer verbiegbaren Schaltzunge (5) und einer festliegend auf einem festen Trägerteil (4) angebracht ist, dadurch gekennzeichnet, daß Schaltzunge (5) und Trägerteil (4) aus einem einzigen Teil bestehen, in dem durch eine Ausstanzung (8) die Schaltzunge (5) ausgebildet ist, und daß im Trägerteil (4) eine Sicke (7) ausgeformt ist, die durch Verformung eine Einstellung des Abstandes der beiden Lichtleiter (2, 3) ermöglicht.

## Claim

A switch for optically separating and connecting light conductors (2, 3), one of which is arranged so as to be transversally deflectable on a bendable switching tongue (5), and one of which is fixed to a rigid carrier member (4), characterised in that the switching tongue (5) and the carrier member (4) consist of a single component in which the switching tongue (5) is formed by a punchedout portion (8) ; and that a fin (7) is formed in the carrier member (4) and when deformed facilitates an adjustment of the distance between the two light conductors (2, 3).

## Revendication

Commutateur pour séparer l'une de l'autre ou pour relier entre elles des fibres optiques (2, 3) dont l'une est montée sur une languette de commutation déformable (5), et l'autre est montée de façon fixe sur un élément de support rigide (4), caractérisé par le fait que la languette de commutation (5) et l'élément de support (4) sont constitués d'une pièce unique dans laquelle la languette de commutation (5) est formée par découpage à la matrice, et que dans l'élément de support (4) est formée une moulure (7) qui autorise, par déformation, un réglage de la distance entre les deux fibres optiques (2, 3).

0 075 918

FIG 1

FIG 2

1